# EUROPEAN PATENT APPLICATION

(11) **EP 2 634 549 A2**
(43) Date of publication of application: **04.09.2013**
(21) Application number: 13154595.6
(22) Date of filing: 08.02.2013
(51) Int. Cl.: G01G 19/414, G07G 1/00

(54) **System and method for differential weighing of items and reusable container for use therewith**

(30) Priority: 02.03.2012 US 201213411325
(71) Applicant: Mettler-Toledo, LLC, Columbus OH 43240-2020 (US)
(72) Inventor: Hagglund, Curtis L., Westerville, OH Ohio 43082 (US)
(74) Representative: Mettler-Toledo

(57) **Abstract**

A differential weighing method for determining the weight of an item or a group of like items that must be weighed, and a reusable container for use in the differential weighing process. The reusable container may be, for example, a reusable basket or bag. The reusable container is sized to fit on the load receiving surface of the differential weighing scale or is equipped with a series of bottom locating projections that contact the load receiving surface and transfer the weight of the container and its contents thereto when the container sits on the scale. The scale is adapted for differential weighing, whereby the scale will report the weight of an item or group of like items that are removed from the reusable container as a positive net weight.

## Description

### TECHNICAL FIELD

The present invention is directed to systems and methods for effecting the differential weighing of items such as, for example, grocery produce items, and to reusable containers that may be used with such systems and methods.

### BACKGROUND

Environmental conservation, including recycling, has taken on a greater importance than ever over recent years. Much effort has gone into encouraging recycling, developing biogradeable materials, and generally promoting the reuse of materials as an alternative to disposal.

One area of continued concern with respect to recycling is the annual use and disposal of millions of disposable (i.e., "one-time use") plastic shopping bags, the production of which entails a significant consumption of energy and raw materials. These one-time use bags are found in a wide variety of retail establishments - especially but not only at grocery stores, where produce bags may be used to contain fresh items (e.g., fruits and vegetables) and point-of-sale (POS) bags may be used to transport items from the retail establisment to the home of a consumer.

In order to be more environmentally friendly, retailers such as grocery stores are looking for more ways to eliminate waste. One such effort in this regard has been to discourage or discontinue the use of one-time use plastic bags. To this end, retailers are encouraging the substitution of paper bags and/or finding new and creative ways for their customers to use reusable containers (e.g., bags).

The use of reusable containers such as reusable bags is not without challenges, however. For example, one such challenge with reusable containers is how to handle fresh items in a grocery store. More particularly, because fresh items are typically sold by weight, they must be weighed at the point of sale. This requires that each fresh item placed into a resuable container must be handled seperately. When one-time use plastic bags are available, customers typically segregate some selected number of a given fresh item into the same one-time use bag(s), wherafter the entire bag of like items may be weighed at the point of sale. This allows for a fairly efficient checkout process.

In contrast, consolidating multiple fresh items into a reusable container results in an inefficiency for retailers because the fresh items must be individually removed from the reusable container before they can be weighed. This is true whether the reusable container contains only one type of fresh item or a variety of fresh items. In the latter case, the inefficiency is compounded because the individual fresh items must also be removed by type (e.g., apples, oranges, etc.) for weighing.

Further, after removal from the reusable container, the individual fresh items of a given item type must be subsequently placed into another container for weighing. Similarly, if the container used for weighing is not another reusable container or similar container that may remain with the customer, then it may be necessary after weighing to place the weighed fresh items back into the original resuable container or into another container that may be used by the customer to transport the items home. This also adds time to the checkout process and increases the checkout queue time.

Another difficulty with such a system and process is associated with the fact that POS systems for use in grocery stores and other retailers who sell items by weight typically employ scanner/scales. Unfortunately, currently available reusable containers are not made to fit, and generally do not fit well, on the platter (load receiving) surface of such scales. This can prohibit the use of known reusbale containers for the weighing of items at a POS, or to incorrect weight readings.

While certain difficulties associated with the use of reusable containers for the weighing of grocery fresh items has been described above for the purpose of illustration, one skilled in the art will realize that these difficulties are not unique to the weighing of grocery fresh items or to foodstuffs in general. Rather, these difficulties are encountered in any setting in which it is necessary to weigh a number of items that have been collected in a reusable container(s).

It can be understood, therefore, that a system and method capable of reducing the amount of time required to weigh a number of loose items presented at a POS location in a reusable container would be advantageous. Further, a reusable container that is designed to properly mate with the load receiving surface of a POS scale would also be of value. Systems and methods of the present invention provide for this ability.

### SUMMARY OF THE GENERAL INVENTIVE CONCEPT

The ability to eliminate one-time use bags is dependent on finding efficient ways to handle items that must be weighed at a POS location (e.g., checkout). Therefore, the present invention is directed to systems and methods for efficiently effecting the differential weighing of items collected in one or more reusable bags or other reusable containers, and to reusable containers designed for use with such systems and methods.

The present inventions covers a method for the differential weighing of items, comprising:
(a) providing a reusable container for holding items to be weighed, said reusable container having a bottom with dimensions that are substantially equal to or less than the dimensions of a load receiving surface of a scale on which said reusable container is placed during a differential weighing process;
(b) providing a scale having a load receiving surface for supporting said reusable container, said scale programmed to enter a differential weighing mode upon detection of an initial stable weight on said load receiving surface followed by a second stable weight that is less than said initial stable weight;
(c) placing items that must be weighed into said reusable container and subsequently placing said reusable container onto said load receiving surface;
(d) selectively removing from said reusable container an item or a group of like items for which a weight must be determined;
(e) determining with said scale the net change in the total weight of said reusable container and any remaining items therein and reporting said net change as the positive value weight of said removed item(s) using the differential weighing mode of said scale;
(f) repeating steps (d) and (e) for each additional item or a group of like items in said reusable container for which a weight must be determined;
(g) removing said reusable container from said load receiving surface of said scale; and
(h) causing said scale to switch to a normal weighing mode once said reusable container has been removed from said load receiving surface thereof.

Generally speaking, differential weighing is a determination of the difference between the initial weight of a load placed on a scale and the residual weight of the load after some amount of the load has been removed. If the load is a container that includes a number of individual items, differential weighing would allow the weight of a single item or a collective number of items of the same type to be determined by calculating the difference between the initial weight of the load and the weight of the load after the item(s) of interest has been removed. For example, if a reusable container containing a number of apples and other items is presented to a scale, the total weight of the apples may be determined by simply removing all the apples from the container. Without employing differential weighing, the alternative technique would be to remove all the apples, place the apples in another container (e.g., bag), then weigh the collected container of apples. Therefore, it is obvious that employing differential weighing can greatly improve the efficiency of a weighing process involving the weighing of items collected in a reusable container.

As briefly mentioned above, one difficulty associated with employing differential weighing to weigh items collected in a reusable container is that known/available reusable containers do not generally fit well on the load receiving surface of a scale. A result of this problem is that items in the reusable container may hang off of or otherwise not contact the load receving surface of the scale, or may be contained within a container that also does not fully reside on the load receiving surface. This may result in a problem commonly referred to in the art as "shrink," because items that do not register or do not register properly with a scale may represent a product giveaway that results in a shrinking of product inventory without the generation of corresponding revenue.

The present invention is therefore also directed to a specialized reusable container, such as a reusable basket or bag, that is specifically designed to fit and work with scales such as the scanner/scales commonly found at retailer POS locations. By providing a specialized reusable container that is designed to properly reside on the load receiving surface of POS-type scanners/scales or other types of scales, "shrink" can be reduced or even eliminated, which results in a revenue and profit savings for the retailer.

A reusable container of the present invention may be of a standard size that properly fits on a scale load receiving surface. A reusable container of the present invention may be provided in the form of, for example, a bag or a hand basket that is made to specifically fit on the load receiving surface of a scanner/scale in a checkout lane. Such a container may be made from, for example, cloth or plastic. In the former case, the bottom of the container may include a reinforced plastic base to give the container better stability. The corners or sides of such a container may also have zippers that allow for the creation of panels that can be pulled down for easier access to the container. Such a container may also be completely or partially translucent or transparent for easier viewing of the contents and to facilitate identification of items for removal.

In any event, once a customer has used a container of the present invention to collect a number of desired items, the entire container is placed onto the load receiving surface of a scale adapted to perform differential weighing. The scale may then be used to determine the weight of a particular item or group of like items that are removed from the reusable container. With the weight of the item(s) known, the proper charge for the item(s) may be levied by identifying the particular item(s) using a scanner or some other device of an associated POS or other system. Item identification may also be accomplished by a number of other techniques that would be well known to one of skill in the art. Once the item(s) to be weighed is removed from the reusable container, the item(s) may be immediately placed into another reusable container or into some other container by which the customer may transport the item(s) home. This saves the extra step of placing the item(s) into an intermediary weighing container, as has been described above as being required when traditional (i.e., non-differential) weighing is employed. This also eliminates the need to perform the alternative but time consuming process of placing the item(s) to be weighed loosely and directly onto the load receiving surface of a the scale.

Systems and methods of the present invention may be used to weigh foodstuffs, and may be particularly well-suited to weighing fresh items or similar goods found in grocery or other retail establishments. However, it should be apparent that the present invention is not in any way limited to use with such goods. Rather, systems and methods of the present invention may be used to weigh a variety of items across a multitude of industries. It should also be apparent that while systems and methods of the present invention may be used in settings where a retail or other employee performs a weighing operation for a customer, the present invention may also be practiced in a self-checkout environment where a customer performs the differential weighing operation by selectively removing items from the reusable container, presenting the items to a scan tunnel, etc.

### BRIEF DESCRIPTION OF THE DRAWINGS

In addition to the features mentioned above, other aspects of the present invention will be readily apparent from the following descriptions of the drawings and exemplary embodiments, wherein like reference numerals across the several views refer to identical or equivalent features, and wherein:

FIG. 1 represents an exemplary combined scanner/scale device designed to be installed into the counter of a POS system;

FIGS. 2A-2B are perspective views and FIG. 2C is a bottom view of one exemplary reusable container of the present invention;

FIG. 3 is an enlarged view depicting the reusable container of FIGS. 2A-2C being placed onto the load receiving surface of the scale portion of the combined scanner/scale device of FIG. 1;

FIGS. 4A-4B are perspective views and FIG. 4C is a bottom view of another exemplary reusable container of the present invention;

FIG. 5 is an enlarged view depicting the reusable container of FIGS. 4A-4C being placed onto the load receiving surface of the scale portion of the combined scanner/scale device of FIG. 1;

FIGS. 6A-6B depict modifications to a reusable bag of the present invention;

FIGS. 7A-7B represent two exemplary reinforcing elements that may be associated with a reusable container similar to that shown in FIGS. 4A-4C;

FIGS. 8A-8E illustrate various exemplary locating projections that may be placed along the bottom of a reusable container of the present invention;

FIG 9. is a flowchart describing one exemplary differential weighing operation according to the present invention; and

FIG. 10 is a flowchart describing another exemplary differential weighing operation according to the present invention.

### DETAILED DESCRIPTION OF EXEMPLARY EMBODIMENT(S)

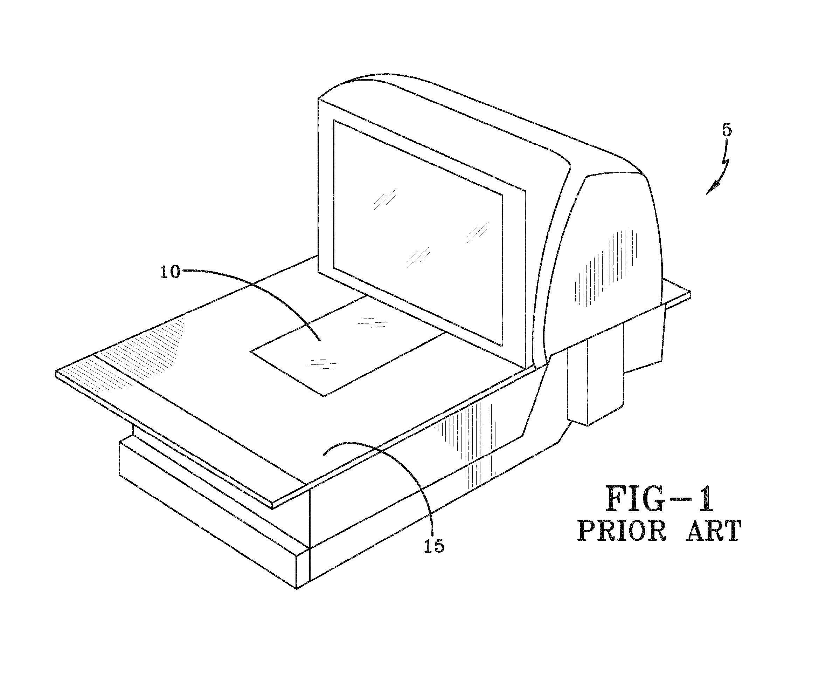

One exemplary embodiment of a known combination scanner/scale device **5** is illustrated in FIG. 1. As would be well known to one of skill in the art, such a device **5** includes an integrated bar code scanner for reading product bar codes through a scanner window **10,** as well as an integrated scale for determining the weight of an item(s) placed on the load receiving surface (platter) **15** of the device. This type of combination scanner/scale device **5** is designed for integration into the counter of a POS system. Standalone combination scanner/scale devices also exist, as do devices having independent scanner and scale elements, and devices having a scale (e.g., platform scale) associated with a hand scanner.

In use, the bar codes of products having a fixed price are passed over the scanner window **10,** whereby the hardware and software associated with the scanner portion of the scanner/scale device **5** functions to read the bar code and to transmit the bar code information to another portion of an associated POS system. Items for which the price is determined by weight are placed on the scale platter **15,** whereafter the hardware and software associated with the scale portion of the scanner/scale device **5** functions to determine the weight of the item and to report the item weight to another portion of an associated POS system.

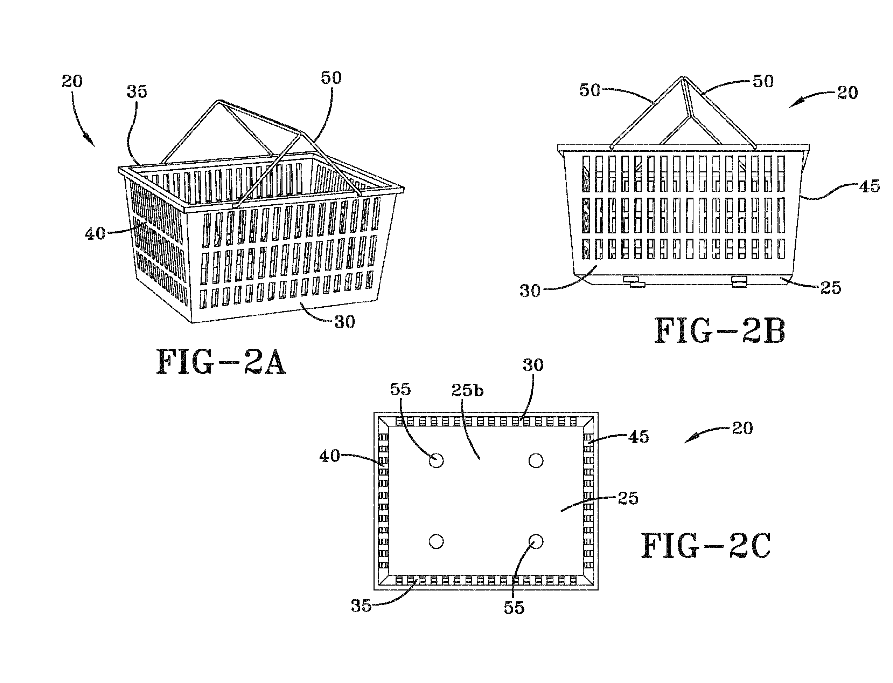

FIGS. 2A-2C depict one exemplary embodiment of a reusable container, in the form of a reusable basket **20,** that may form a part of a system and method of the present invention. The reusable basket **20** shown in FIGS. 2A-2C is of substantially rectangular shape and includes a bottom wall **25** with four upwardly extending side walls **30-45** and an open top. A handle or handles **50** are provided to facilitate carrying of the reusable basket **20** by a user thereof. This particular reusable basket **20** looks much like a typical plastic shopping basket, although other shapes and designs are certainly also possible. The reusable basket **20** is preferably manufactured from a rigid or semi-rigid material such as any number of plastics, so as to maintain its shape and adequately support items placed inside.

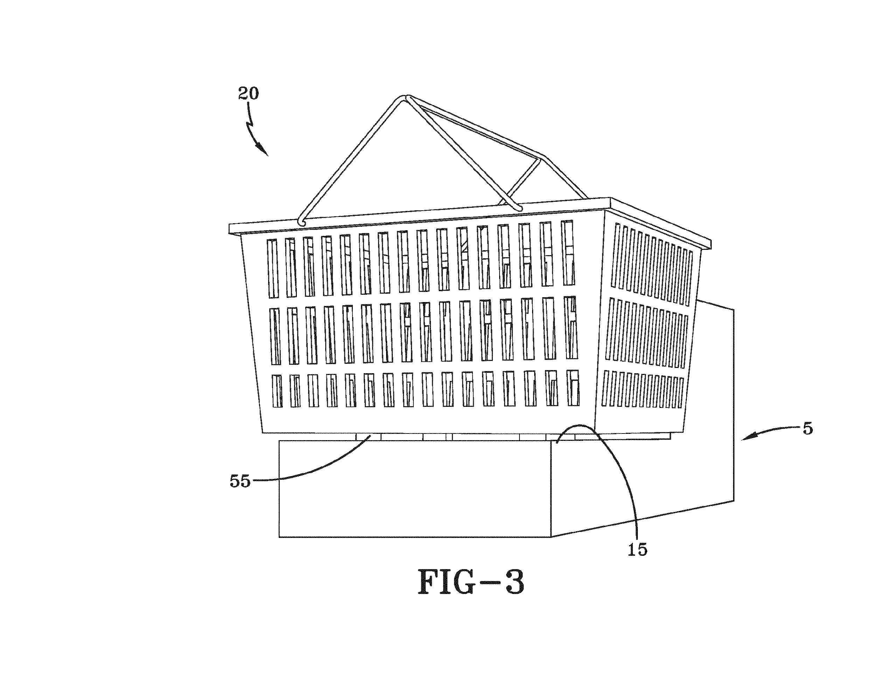

In order to avoid problems like "shrink" and to ensure that the differential weighing process of the present invention is as accurate and efficient as possible, a reusable basket of the present invention may have a bottom surface (footprint) **25b** whose dimensions are substantially the same as or smaller than the scale platter **15.** In this manner, the entire reusable basket **20** can be supported by the scale platter **15** during a differential weighing operation. Alternatively, and as shown, a reusable basket **20** may instead (or also) include a number of locating projections **55** that extend downward from the bottom surface **25b.** The locating projections **55** are arranged to fit within the bounds of the scale platter **15** when the reusable basket **20** is placed on the scanner/scale device **5.** In this manner, the actual footprint of the reusable basket **20** may be larger than the scale platter **15** while still ensuring that the total weight of all the items in the reusable container will be transferred to and detected by the scale (see FIG. 3).

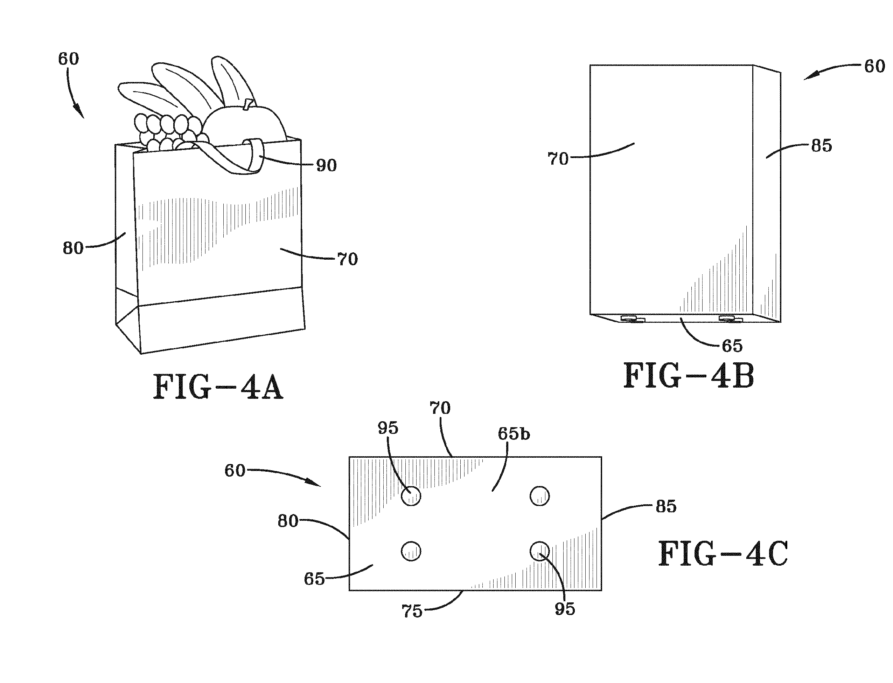

One alternative embodiment of a reusable container, in the form of a reusable bag **60,** is depicted in FIGS. 4A-4C. This reusable bag **60** also includes a bottom wall **65** with four upwardly extending side walls **70-85** and an open top. A handle or handles **90** may be provided to facilitate carrying of the reusable bag **60** by a user thereof. However, in contrast to the reusable basket **20** of FIGS. 2A-2C, this particular reusable bag **60** looks much like a typical paper or reusable shopping bag, although other shapes and designs are certainly also possible. The reusable bag **60** may be manufactured from cotton, jute, nylon, non-woven polypropylene or any number of other suitable materials with which one of skill in the art would be familiar.

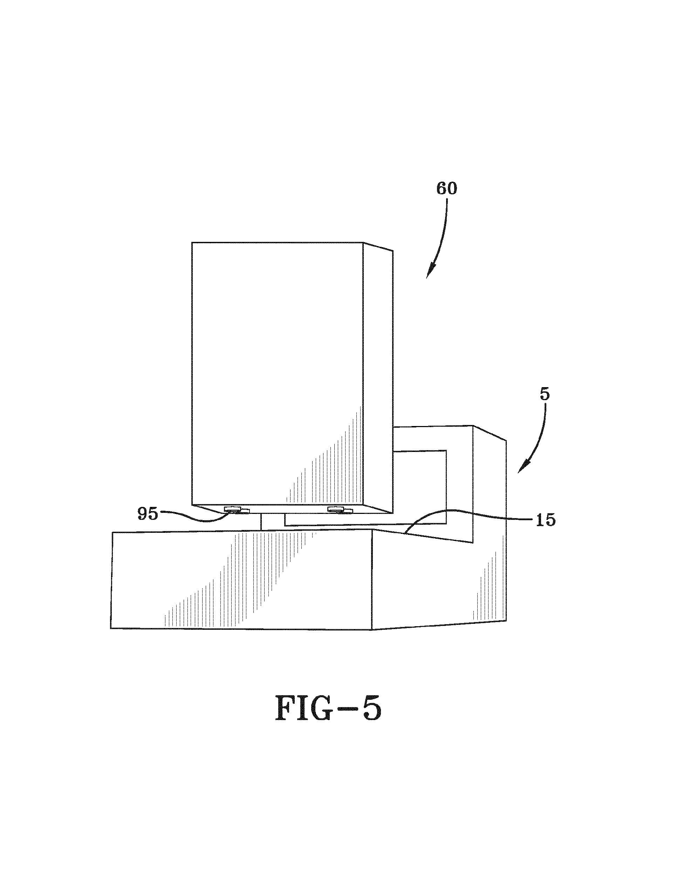

As with the reusable basket **20,** the reusable bag **60** may also have a bottom surface (footprint) **65b** whose dimensions are substantially the same as or smaller than the scale platter **15.** In this manner, the entire reusable bag **60** can be supported by the scale platter **15** during a differential weighing operation. Alternatively, and as shown, a reusable bag **60** of the present invention may instead (or also) include a number of locating projections **95** that extend downward from the bottom surface **65b** thereof. The locating projections **95** are arranged to fit within the bounds of the scale platter **15** when the reusable bag **60** is placed on the scanner/scale device **5.** In this manner, the actual footprint of the reusable bag **60** may be larger than the scale platter **15** while still ensuring that the total weight of all the items in the reusable bag will be transferred to and detected by the scale (see FIG. 5). The locating projections **95** may be integral to the bottom surface **65b** of the bag **60,** or the locating projections may be associated with a separate support element that may be placed under the bag during the weighing operation. In this latter embodiment, such a support element may be carried separately by a shopper or on a shopping cart, or may be located near the scanner/scale device **5** for use during a weighing operation.

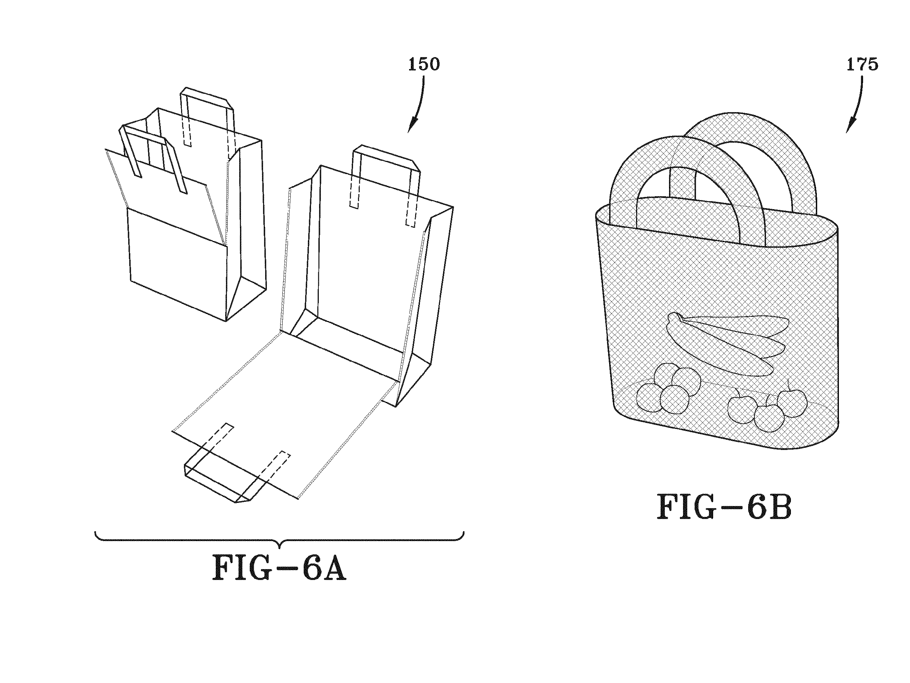

A reusable bag of the present invention may include modifications that make it easier to load or unload items to/from the bag, to see items that need to be removed for weighing at a POS location, etc. For example, as represented in FIG. 6A, a reusable bag **150** of the present invention may have corners that are provided with zippers to allow for panels to be pulled down for easier access. Zippers may be provided on 1, 2, 3, or 4 sides of the reusable bag **150.** The use of zippers may allow the bag to be opened further when desired, thereby improving access and making it easier for a user to remove items therefrom. Any of the zippers may be adjusted to any height (i.e., to degree of closure) to control the amount of access to the interior of the bag **150.**

As shown in FIG. 6B, a reusable bag **175** of the present invention may also be partially or fully translucent or transparent. This improves the visibility of items located within the bag, which facilitates their location and removal for weighing. It may also be possible to provide an otherwise opaque reusable bag of the present invention with one or more translucent or transparent windows for the same purpose.

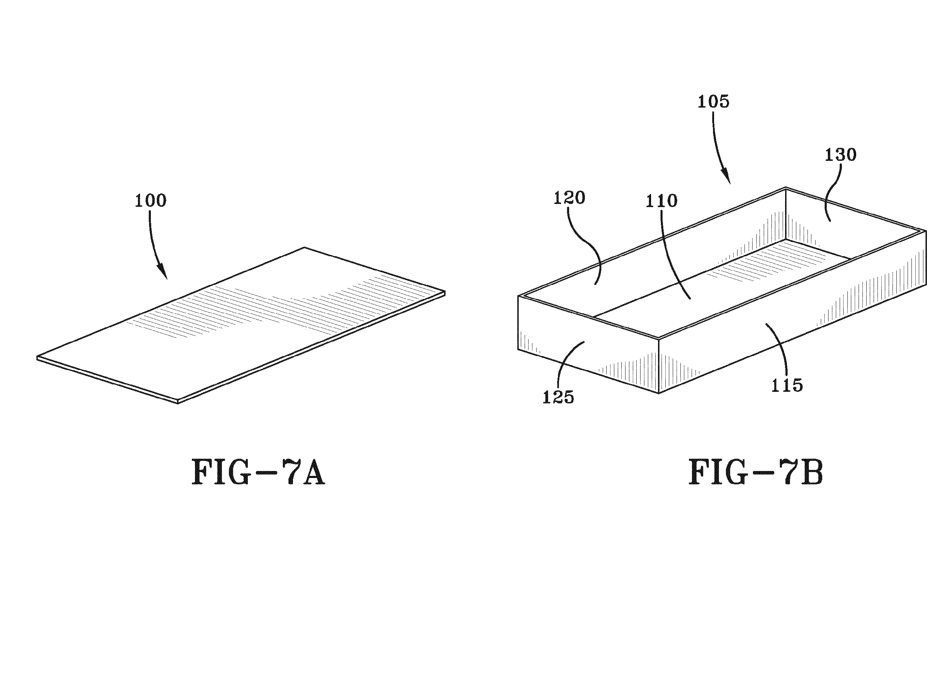

As it is realized that many of the materials from which it may be preferred to make the reusable bag **60** may be soft and unable or substantially unable to maintain a given shape, it may be desirable or even necessary to reinforce at least the bottom wall 65 of the reusable bag. This may be accomplished in a number of ways. Two exemplary embodiments of reinforcing elements that may be employed for this purpose are depicted in FIGS. 7A-7B.

As shown in FIG. 7A, a reinforcement plate **100** may be used to reinforce the bottom of the reusable bag **60.** The reinforcement plate **100** may be a properly dimensioned sheet of rigid material such as, but not limited to, cardboard or plastic. It is contemplated that the reinforcement plate **100** may be located inside the reusable bag **60** and may be removable or affixed to the bottom wall thereof. Alternatively, it is possible that the reinforcement plate **100** may be located on the outside (along the bottom surface **65b)** of the reusable bag **60.** In either case, the projections **95** located along the bottom surface **65b** of the reusable bag **60** may be anchored to the reinforcement plate **100** when present.

FIG. 7B depicts an alternative reinforcement element, in the form of a reinforcement tray **105,** that may be used to reinforce the bottom of the reusable bag **60.** The reinforcement tray **105** may have a bottom wall **110** that is similar to the reinforcement plate **100,** but the reinforcement tray also includes sidewalls **115-130** that extend upward from the bottom wall to form a shallow open-top container at the bottom of the reusable bag **60.** As with the reinforcement plate **100,** it is contemplated that the reinforcement tray **105** may be located inside the reusable bag **60** and may be removable or affixed to the bottom wall thereof. Alternatively, it is possible that the reinforcement tray **105** may be located on the outside (along the bottom surface **65b)** of the reusable bag **60.** In either case, the projections **95** located along the bottom surface **65b** of the reusable bag **60** may be anchored to the bottom wall of the reinforcement tray **105** when present. The reinforcement tray **105** may be manufactured from a rigid or semi-rigid material such as any number of plastics, so as to maintain its shape and adequately support items placed inside.

When reinforcement is desirable or necessary, a reusable bag of the present invention may also be reinforced in other ways. For example, thin wire rods may be placed in the corners of such a reusable bag to help maintain the bag in a desired shape (e.g., to prevent deformation such as bulging or sagging). A reusable bag reinforced in this manner may still remain substantially collapsible, much like the various foldable/collapsible laundry baskets that are currently commercially available.

While the reusable basket **20** of FIGS. 2A-2B and the reusable bag **60** of FIGS. 4A-4C have been shown herein to include an arrangement of four round projections **55, 95,** it should be realized that a variety of other projection shapes, quantities and arrangements may be used. For example, the shape, quantity and/or arrangement of the projections may be tailored to mate with a particular scale platter.

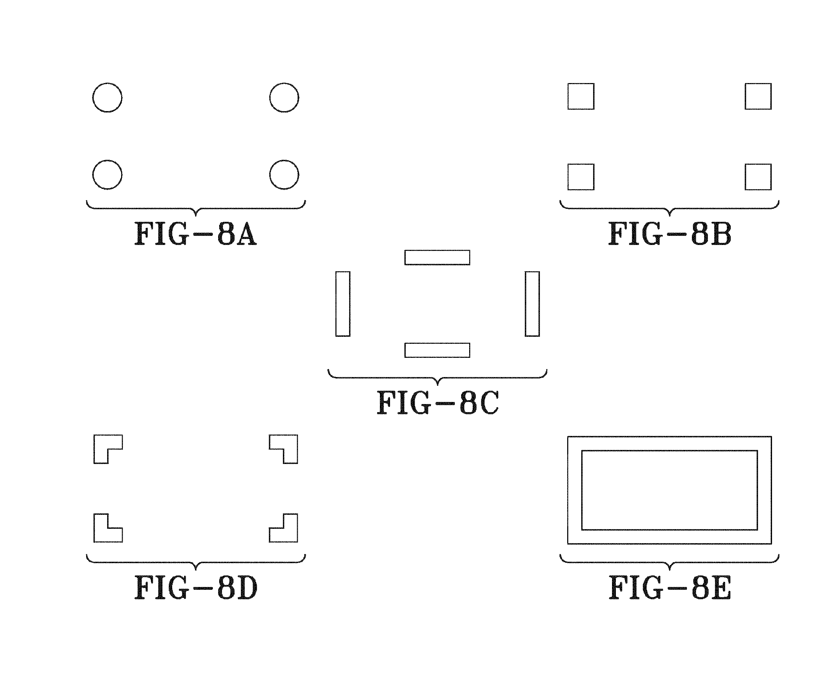

A limited number of different exemplary projection shapes and arrangements are presented in FIGS. 8A-8E. For purposes of comparison with the projection arrangements shown in FIGS. 2A-5, these alternative embodiments still generally contain four projections that are located to fit within the bounds of the scale platter **15** of FIG. 1. Nonetheless, it can be appreciated that there are a large number of other projection shapes, quantities and arrangements that may be used with a reusable basket, bag or other reusable container, and all such projection shapes, quantities and arrangements are considered to be within the scope of the present invention.

While not expressly shown herein, it should also be understood that a scale platter may be designed or modified to better locate and support a reusable container. For example, a scale platter may include recesses, ribs, or other elements that facilitate proper location of the reusable containers or the reusable container locating projections of the present invention onto the scale. With respect to the specific projections **55, 95** depicted herein, for example, a scale platter may have a corresponding number of circular recesses that are appropriately located to receive the projections. Ribs or other protruding elements could be used to form corners or complete boundaries against which the bottom sides of a reusable container/bag, or the edges/side walls of locating projections, may be located. It should be ensured, however, that such locating elements in no way support any part of the load presented by the reusable container/bag.

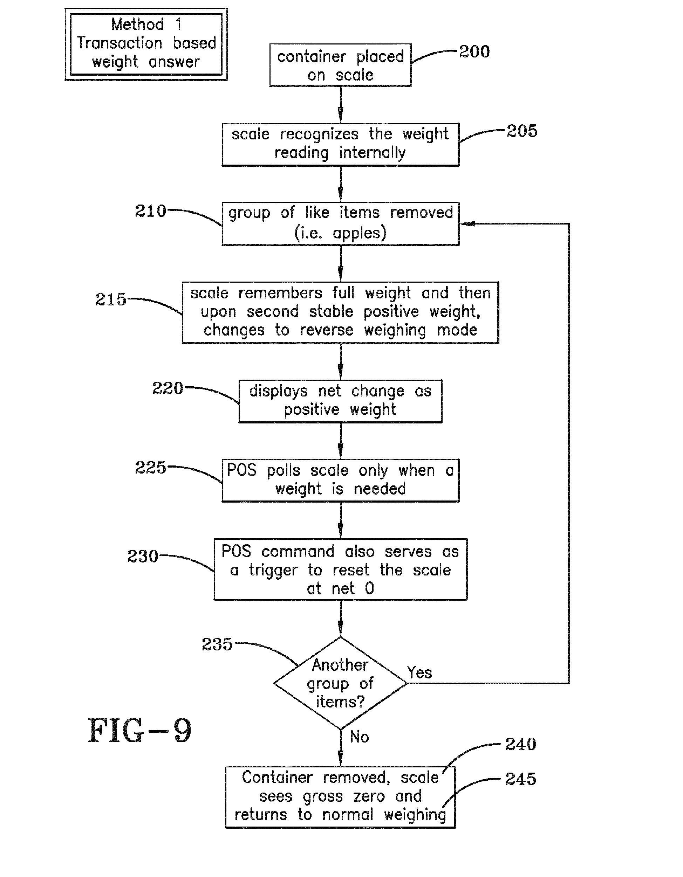

A flowchart representing one differential weighing process according to the present invention is depicted in FIG. 9. The process begins when a load comprising a reusable container of the present invention holding one or more items to be weighed is placed on a scale **200,** such as the scale of a combination scanner/scale device. Once the reusable container is stable, the scale determines the initial total weight of the reusable container and the contained items **205** (or just the weight of the items if the scale has been tared to account for the container). Once the scale has determined the total weight, one or a group of like items (e.g., apples) to be weighed are removed from the reusable container **210.** When the load on the scale has again stabilized and the scale sees another positive weight that is less than the initial weight, the scale switches to a reverse (differential) weighing mode **215.** The scale then reports the net change in the weight of the load (i.e., the weight of the removed apples) as a positive weight **220.** Once the weight has been reported by the scale, the scale may, but is not necessarily required to, return to a zero weight reading.

In this particular embodiment, an associated POS system only polls the scale when a weight reading is needed **225.** In other words, the scale of this embodiment only reports the weight of the removed items to the POS system when the POS system polls the scale for the weight reading. This POS system polling command also serves as a trigger to reset the scale to "net 0" **230.** In this manner, when the POS system sends a signal asking for the weight value, the scale will know that the current "transaction" is over when it sends the weight result and, thus, the scale can set itself to net "0" so that the next transaction can start. So if, for example, a group of apples were removed from a reusable container and the weight of the apples was transmitted to the POS, the scale starts at net zero before the next group of items is removed from the reusable container for differential weighing. Resetting of the scale may be initiated in other ways in other embodiments.

If another item or group of items in the reusable container needs to be weighed **235,** the item(s) is removed as shown in step **210,** whereafter the scale will once again report the net weight of the removed item(s) as a positive weight. If no additional items in the reusable container need to be weighed (or if the container is empty) the reusable container is removed from the scale. This results in the scale seeing a "gross zero" weight reading **240,** which causes the scale to return to a normal (non-differential) weighing mode **245.**

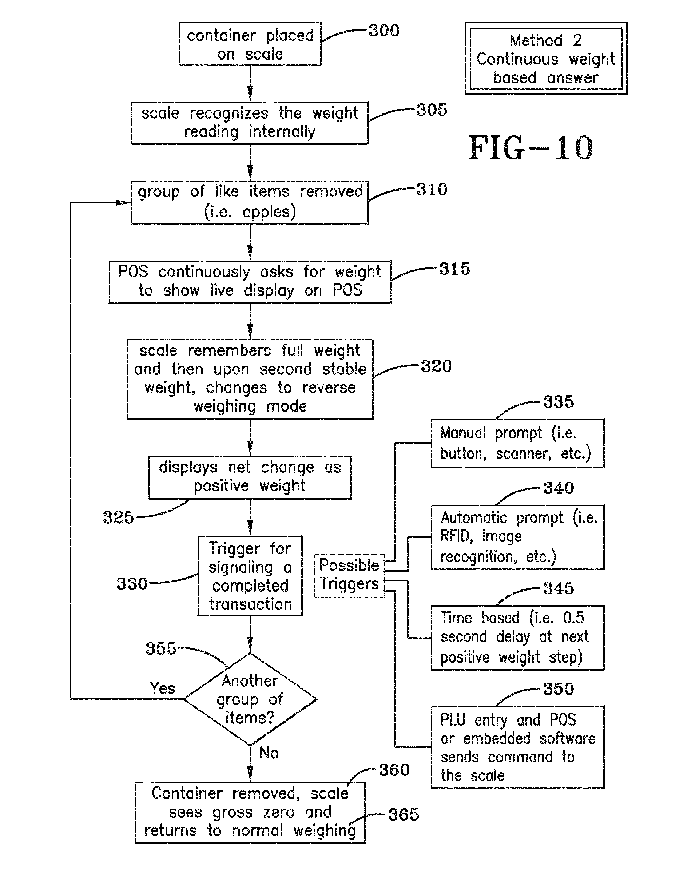

A flowchart representing an alternative differential weighing process according to the present invention is depicted in FIG. 10. This process begins when a load comprising a reusable container or bag of the present invention holding one or more items to be weighed is placed on a scale **300,** such as the scale of a combination scanner/scale device. Once the reusable container is stable, the scale determines the initial total weight of the reusable container and the contained items **305** (or just the weight of the items if the scale has been tared to account for the container). Once the scale has determined the total weight, one or a group of like items (e.g., apples) to be weighed are removed from the reusable container **310.**

In this embodiment, an associated POS system continually polls the scale for weight information so that a live weight may be displayed on/by the POS **315.** When the load on the scale has again stabilized and the scale sees another positive weight that is less than the initial weight, the scale switches to a reverse (differential) weighing mode **320.** The scale then reports the net change in the weight of the load (i.e., the weight of the removed apples) as a positive weight **325.**

Once the scale has reported a weight reading for the removed item(s), a trigger signal may be sent to the scale to indicate a completed transaction **330.** A number of different trigger signals may be used for this purpose. For example, a completed transaction trigger signal may be a manual prompt, such as may be generated by pressing a particular button, etc. **335.** A completed transaction trigger signal may also be generated automatically, such as upon detection (identification) of the removed item(s) via a RFID device, via image recognition, etc. **340.** Alternatively, a completed transaction trigger signal may be generated after some predetermined time delay **345.**

In yet another variation, a completed transaction trigger signal may be sent upon the entry of a price look-up (PLU) code associated with the removed item(s) **350.** In this case, the signal may be sent by the POS system or by embedded software. The embedded software may reside within the scanner or the POS system. The software may pass a signal to the scale to indicate that a transaction is complete, whereafter the scale would go to net zero. For example, more and more products (e.g., apples) now have barcodes attached directly thereto. Such a barcode could be scanned after all of a group of such products are removed from a reusable container and scanning of the barcode could be used to generate a signal that gets passed to the scale via the embedded software

If another item or group of items in the reusable container needs to be weighed **355,** the item(s) is removed as shown in step **310,** whereafter the scale will once again report the weight of the removed item(s) as a positive weight. If no additional items in the reusable container need to be weighed (or if the container is empty) the reusable container is removed from the scale **360.** This results in the scale seeing a "gross zero" weight reading, which causes the scale to return to a normal (non-differential) weighing mode **365.**

Differential weighing processes of the present invention, such as the exemplary differential weighing processes illustrated in FIGS. 9-10, may be used in a full-service checkout environment where a scale or POS operator takes the reusable container from a customer and performs the weighing operations on the items selected by the customer that are priced by weight. Alternatively, differential weighing processes of the present invention, such as the exemplary differential weighing processes illustrated in FIGS. 9-10, may be used in a self-checkout environment where customers perform the weighing operations on selected items that are priced by weight.

While certain embodiments of the present invention are described in detail above, the scope of the invention is not to be considered limited by such disclosure, and modifications are possible without departing from the spirit of the invention as evidenced by the claims.

## Claims

1. A method for the differential weighing of items, comprising:
(a) providing a reusable container (20, 60, 150, 175) for holding items to be weighed, said reusable container (20, 60, 150, 175) having a bottom (65, 110) with dimensions that are substantially equal to or less than the dimensions of a load receiving surface (15) of a scale on which said reusable container (20, 60, 150, 175) is placed during a differential weighing process;
(b) providing a scale having a load receiving surface (15) for supporting said reusable container, said scale programmed to enter a differential weighing mode upon detection of an initial stable weight on said load receiving surface followed by a second stable weight that is less than said initial stable weight;
(c) placing items that must be weighed into said reusable container (20, 60, 150, 175) and subsequently placing said reusable container (20, 60, 150, 175) onto said load receiving surface (15);
(d) selectively removing from said reusable container (20, 60, 150, 175) an item or a group of like items for which a weight must be determined;
(e) determining with said scale the net change in the total weight of said reusable container (20, 60, 150, 175) and any remaining items therein and reporting said net change as the positive value weight of said removed item(s) using the differential weighing mode of said scale;
(f) repeating steps (d) and (e) for each additional item or a group of like items in said reusable container (20, 60, 150, 175) for which a weight must be determined;
(g) removing said reusable container (20, 60, 150, 175) from said load receiving surface (15) of said scale; and
(h) causing said scale to switch to a normal weighing mode once said reusable container (20, 60, 150, 175) has been removed from said load receiving surface (15) thereof.

2. The differential weighing method of claim 1, wherein said scale is associated with a POS system and reports weight readings to said POS system.

3. The differential weighing method of claim 1 or 2, wherein said scale is a part of a combination scanner/scale device (5).

4. The differential weighing method of claim 2 or 3, wherein said POS system polls said scale only when a weight reading is needed to complete a transaction.

5. The differential weighing method of claim 2, 3 or 4, wherein said POS system continuously polls said scale for a weight reading.

6. The differential weighing method of claim 5, wherein weight readings from said scale are used by said POS system to display a live weight.

7. The differential weighing method according to one of the claims 1 to 6, wherein said reusable container is a reusable basket and/or bag (20, 60, 150, 175).

8. The differential weighing method according to one of the claims 1 to 7, wherein fresh grocery items are differentially weighed.

9. The differential weighing method according to one of the claims 1 to 8, wherein said scale is associated with a POS system and reports weight readings to said POS system.

10. The differential weighing method according to one of the claims 1 to 9, wherein said scale is a part of a combination scanner/scale device (5).

11. The differential weighing method according to one of the claims 1 to 10, wherein said POS system polls said scale only when a weight reading is needed to complete a transaction.

12. The differential weighing method according to one of the claims 1 to 11, wherein said POS system continuously polls said scale for a weight reading.

13. The differential weighing method according to one of the claims 1 to 12, wherein weight readings from said scale are used by said POS system to display a live weight.

14. The differential weighing method according to one of the claims 1 to 13, wherein said reusable container (20, 60, 150, 175) is a reusable basket (175) or reusable container (20, 60, 150) and said plurality of projections for placement between a bottom wall (65, 110) of said reusable container (20, 60, 150, 175) and a load receiving surface (15) of a scale are attached to the bottom wall (65, 110) of said reusable basket (20, 60, 150, 175).

15. The differential weighing method according to one of the claims 1 to 14, wherein said reusable container (20, 60, 150, 175) is a reusable bag (20, 60, 150) and said plurality of projections for placement between a bottom wall (65, 110) of said reusable container (20, 60, 150) and a load receiving surface (15) of a scale are attached to a separate element that is placed between the bottom wall (65, 110) of said reusable bag and the load receiving surface (15) of a scale during a differential weighing operation.
